# EUROPEAN PATENT APPLICATION

(11) **EP 2 575 339 A1**
(43) Date of publication of application: **03.04.2013**
(21) Application number: 12186367.4
(22) Date of filing: 27.09.2012
(51) Int. Cl.: H04M 3/487, G06Q 30/02

(54) **Profiling users in a private online system**

(30) Priority: 27.09.2011 US 201113246431
(71) Applicant: Max-Planck-Gesellschaft zur Förderung der Wissenschaften e.V., 80539 München (DE)
(72) Inventor: Francis, Paul, 67663 Kaiserslautern (DE); Cheng, Bin, 69214 Eppelheim (DE)
(74) Representative: Bach, Alexander

(57) **Abstract**

Multiple private advertising systems independently profile users while protecting user privacy and enabling content publishers to limit advertiser access to their content and user information. A client computer supports private profiling modules, each of which is associated with a different advertising network and is adapted to create a user profile based on the content accessed by the user. Content publishers specify profiling restrictions to limit access by private profiling modules to profiling information associated with their content. The profiling restrictions and profiling information may be included in the content or communicated separately to the client computer. Profiling restrictions and profiling information may be expressed in a markup language. Each private profiling module selects information items of interest to the user based on the user profile that it creates. Communications between private profiling modules and associated advertising networks are encrypted and communicated via proxy to protect the privacy of the user.

## Description

### Cross-Reference to Related Applications

This application is related to U.S. Pat. Appl. No. 12/552,549, filed September 2, 2009, and entitled "PRIVATE, ACCOUNTABLE, AND PERSONALIZED INFORMATION DELIVERY IN A NETWORKED SYSTEM"; U.S. Pat. Appl. No. 12/757,986, filed April 10, 2010, and entitled "PRESERVING USER PRIVACY IN RESPONSE TO USER INTERACTIONS"; U.S. Pat. Appl. No. 13/246,475, filed September 27, 2011, [Attorney Docket No. MPG000510US], and entitled "CONDUCTING AUCTIONS IN PRIVATE ONLINE ADVERTISING SYSTEMS;" and U.S. Pat. Appl. No. 13/246,517, filed September 27, 2011, [Attorney Docket No. MPG000520US], and entitled "AUCTION MODULES IN PRIVATE ONLINE ADVERTISING SYSTEMS," all of which are incorporated by reference herein for all purposes.

### Field of the Invention

This invention relates generally to the field of information delivery on computer networks, and more particularly to systems and methods for efficiently providing individually targeted advertisements to users while protecting the users' privacy.

### Background of the Invention

A major goal of advertising systems, internet advertising included, is to accurately target the advertisement to the user. Unlike broadcast media such as television and radio, which targets advertisements to groups of users, Internet advertisements can be targeted to individual users. This is good for the advertiser because less money is wasted presenting advertisements to users who don't care about them, and it is good for users because they are not bothered by advertisements that don't interest them.

However, individualized user targeting can also lead to loss of privacy. For example, information about which advertisements are shown to a specific user and which advertisements the user has interacted with (for example clicked on) is often gathered so that the advertiser can monitor the effectiveness of their advertisements and pay for having the advertisement delivered. This information also leads to a loss of user privacy, as personal information about the user may be revealed or inferred from the user interaction.

In current non-private online advertising systems, advertising networks or other data aggregators, referred to as brokers, build user profiles by gathering information about user behavior. For example, advertising networks may use websites, referred to as publishers, to place web browser cookies or other identifiers on a user's computer. These browser cookies can then be accessed by advertising networks when the user accesses other web pages from other publishers, thereby identifying and tracking the user. Brokers often pay publishers to cooperate in tracking users in this way.

In a private advertisement system, the broker does not receive any user identifiers. Thus, the users' privacy and anonymity is preserved. Typical private advertisement systems use a combination of encryption and third party systems, such as anonymizing proxy servers, to protect user privacy.

However, current private advertising systems are only capable of operating with a single broker. Additionally, current private advertising systems have no way of allowing applications to limit which private advertising systems may access and/or observe user activity. Moreover, current private advertising systems do not teach how to build accurate and meaningful profiles of their users' interests and preferences based on content that the user accesses or interacts with, which limits the effectiveness of targeted advertising. Finally, current private advertising systems do not report on what content the user has accessed or interacted with.

### Summary of the Invention

An embodiment of the invention enables multiple private advertising systems to independently profile users while protecting user privacy and to enable content publishers to select and limit advertiser access to their content and user information. In an embodiment, a client computer is capable of supporting multiple software modules from different advertising networks. Each module, referred to as a private profiling module, is adapted to create a user profile based on the content accessed by the user and his or her behavior with regard to this content. The user profile includes user attributes and user interests and is used by the private profiling module to select advertisements and other information items of potential interest to the user. Information items and other communications between the private profiling module and its associated advertising network are encrypted and communicated via at least one proxy to protect the privacy of the user.

In an embodiment, content publishers can specify profiling restrictions that select (or exclude) one or more of the private profiling modules to receive access to profiling information associated with their content. In an embodiment, an enforcer software module is used to control access to content by private profiling modules. Profiling information may include the content, user interactions with respect to the content, and additional profiling information received from the content publishers. The profiling restrictions and the additional profiling information may be included in the content or communicated separately to the client computer. In a further embodiment, profiling restrictions and profiling information may be expressed in a markup language such as HTML or XML. In a further embodiment, a non-selected private profiling module may be prevented from accessing the profiling information, thereby preserving a user's privacy with respect to the non-selected private profiling module. In a further embodiment, the profiling restriction may be received from the content publisher. In a further embodiment, the profiling restriction includes an identifier associated with at least one private profiling module. In a further embodiment, the profiling restriction includes at least one parameter for selection logic adapted to select at least one of the set of private profiling modules. In a further embodiment, a parameter for selection logic adapted to select at least one of a set of private profiling modules includes a priority value. In yet another embodiment, the profiling information is included in the electronic content item. In another embodiment, a report generated based on aggregated profiling information provided to a selected private profiling module over a time period may include an indicator quantifying a change to the user profile based on the electronic content item. The indicator quantifying the change may further be based at least in part on a recency that the profiling information was provided to the selected private profiling modules. The report may further include an indicator quantifying a contribution of at least the content publisher to an attribute included in the user profile and used to select a second electronic content for presentation to a user.

A further embodiment of the invention preserves user privacy in response to user interactions with information items, such as advertisements, by controlling the behavior of a user's computer. Information items are associated with item response specifiers. Item response specifiers control the behaviors of the user's computer in response to user interactions with information items. Item response specifiers may be communicated to the user's computer at the same time as the associated information items or may be retrieved separately by the user's computer. In a further embodiment, the user's computer may retrieve item response specifiers from a trusted third party, such as a government agency or privacy advocacy group. Item response specifiers may be cryptographically signed to ensure their integrity. The validity of the item response specifier may be verified using a cryptographic signature

Following a user interaction with an information item, the user's computer refers to the item response specifier to determine an appropriate privacy-preserving post-interaction behavior. Examples of privacy-preserving behavior include a silent privacy-preserving behavior, a proxied interaction privacy-preserving behavior, a partial proxied interaction privacy-preserving behavior, a delayed handoff privacy-preserving behavior, and a direct to provider privacy-preserving behavior.

The silent privacy-preserving behavior restricts the user computer to retrieving supplemental information that are already stored locally in response to a user interaction with an information item.

The proxied and partial proxied privacy-preserving behaviors allow the user computer to retrieve non-local supplemental information items through a proxy to preserve the user's privacy. More particularly, an embodiment of the invention may include receiving at least one supplemental information item associated with the information item; storing the supplemental information item in the client computer for presentation in response to user interaction with the information item. Additionally, the proxied privacy-preserving behavior restricts the user's computer from transmitting personally identifiable information in response to the user interaction with the information item. More particularly, the proxied privacy-preserving behavior may be adapted to inhibit the client computer from communicating personally identifiable information in response to user interaction with the selected information item and the supplemental information item, including inhibiting a data submission protocol operation. An item response specifier may indicate a delayed handoff privacy-preserving behavior with the item response specifier and may include a first supplemental information item identifier; wherein the first supplemental information item identifier is associated with a first supplemental information item stored by an information item broker, wherein the first supplemental information item includes a second information item identifier; and wherein the second supplemental information item identifier is associated with a second supplemental information item stored by an information item provider. The second supplemental information item may also be associated with at least one additional information item.

The delayed handoff privacy-preserving behavior allows the user computer to retrieve some supplemental information items from an information item broker. If the user decides to submit personally identifiable information, then the user computer may retrieve further supplemental information items from the information item provider. In a further embodiment, the supplemental information items accessed from the information item provider are not specific to a single information item, which further protects user privacy. More particularly, an item response specifier may indicate a proxied privacy-preserving behavior, such that a client computer is directed to retrieve at least one supplemental information item via a proxy adapted to conceal the network address of the client computer and using encryption adapted to conceal contents of the supplemental information item from at least the proxy. The proxied privacy-preserving behavior may be adapted to inhibit the client computer from communicating personally identifiable information in response to user interaction with the selected information item and the supplemental information item, including inhibiting a data submission protocol operation.

The direct to provider privacy-preserving behavior allows the user computer to retrieve supplemental information items from any source, including information item dealers and information item brokers. An item response specifier provider may be separate from an information item broker.

### Brief description of the drawings

The above and further aspects and advantages of the present invention may better be understood by referring to the following description taken in conjunction with the accompanying drawings, in which:
Figures 1A-1C are diagrams of systems according to embodiments of the invention;
Figure 2 illustrates an example method for creating profiles of private users according to an embodiment of the invention; and
Figure 3 illustrates an example computer system suitable for implementing embodiments of the invention.

### Detailed Description

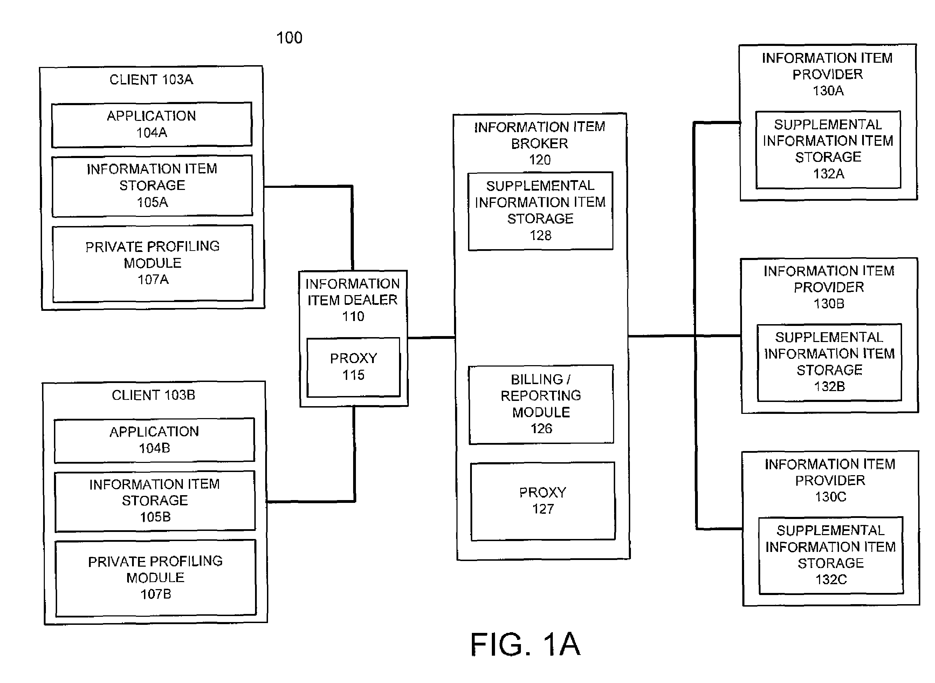

Figures 1A-1C are diagrams of systems according to embodiments of the invention. Figure 1A illustrates an example private advertising system 100 according to an embodiment of the invention. System 100 includes one or more client systems, including clients 103A and 103B. Clients 103 include computer systems and electronic communication devices capable of accessing information over a network. Examples of clients 103 include computers in the form of desktop or portable personal computers; mobile communication devices, including mobile telephones, handheld and tablet computers, portable media players, and electronic gaming devices; network connected devices adapted to connect with televisions, including set-top boxes and game consoles; and any other electronic devices capable of communicating via wired and/or wireless network interfaces with electronic communications networks, including local-area networks and wide area networks, such as the Internet, cellular data networks, cable television data networks, and one-way or two-way satellite data networks.

Each of the client systems 103A and 103B include one or more applications 104, such as 104A and 104B, adapted to retrieve information via an electronic communications network. Examples of applications 104 include web browsers; game applications; application software for any function or purpose; digital distribution platforms for distributing application software and/or video, audio, text, or other content; and operating systems and system-level resources capable of being accessed by other applications. Each of the client systems 103 may have one or more applications 104.

Additionally, each of the client systems 103 includes an information item storage, such as 105A and 105B, for storing one or more information items. Example information items include text, images, video, animation, speech, audio, three-dimensional computer graphics data and images or animation rendered there from, hypertext, graphical user interface widgets or controls, interactive content such as games, and computer-executed logic in the form of programs or scripts. Information items may be used for advertisements or for other purposes, such as providing information to users or soliciting user feedback. Examples of information items can include pop-up and banner advertisements, as well as advertisements appearing within the display or user interface of an application.

Each of the information item storages 105 may store information items targeted to their respective clients 103 or the user of their respective clients 103. Information items may be targeted at users or the clients 103 based on users' interests, demographic information including factors such as age, gender, location, income, and marital status, psychographic information including factors such as desire for prestige, desire for safety, and desire for good value, or attributes of the clients 103. Additionally, each of the information item storages 105A and 105B may store information items that are not targeted at any specific user or client. In an embodiment, information items storages 105 are implemented as databases or other data structures, such as arrays.

In an embodiment, each of the clients 103 include private profiling modules 107, such as 107A and 107B. Each private profiling module is adapted to collect information about its client and/or the user of the client to build a profile of their attributes, interests, and/or preferences. Additionally, each of the private profiling modules 107 is used to select locally stored information items from the clients' information item storages 105 for presentation to their respective users. In an embodiment, each information item may be associated with one or more categories that may be matched with user-preferred categories stored in the user profile. In a further embodiment, privacy profiling modules may use auctioning and weighting schemes to select information items to present to users. Each of the private profiling modules is also adapted to communicate with brokers in a manner that preserves user privacy.

In one embodiment of the invention, the private profiling modules 107 and information item storages 105 are standalone software applications executed by the clients in conjunction with other applications 104, such as web browsers and application software. In another embodiment, the private profiling modules 107 and information item storages 105 are integrated within another software application, such as a web browser or application software. In still another embodiment, the private profiling modules 107 and information item storages 105 are integrated within an operating system or other system-level resource of the client 103.

In an embodiment, private profiling modules 107 work in conjunction with one or more information item brokers 120, one or more information item dealers 110, and one or more information item providers 130, such as information item providers 130A, 130B, and 130C. Information item providers 130 are entities that provide information items to be distributed to clients 103 for presentation to users. Examples of information item providers include advertisers.

In an embodiment, the clients 103 report user interactions with information items to one or more information item brokers 120. Examples of information item brokers may include advertising networks, advertising distributors and resellers, and data aggregators. For example, if a user requests additional information associated with an advertisement by clicking on the advertisement, the client 103 may report this user interaction to the information item broker 120. The information item broker 120 may use this report of the user interaction for purposes of tracking and billing information item providers 130 using billing and reporting module 126 and/or for providing supplemental information items to the client 103 from supplemental information item storage 128 and/or 132. In a further embodiment, a supplemental information item may act as the target of additional user interactions, which may result in the retrieval and display of additional supplemental information items.

Embodiments of the invention maintain the privacy of the users of the clients 103 by using one or more proxies and/or encryption to facilitate communications between the clients 103 and one or more information item brokers 120. In one embodiment, the clients 103 encrypt communications with the information item broker 120 using a public encryption key associated with the information item broker 120. The encrypted communications are then sent from the clients 103 to the information item brokers 120 through one or more information item dealers 110, each of which includes a proxy 115. Upon receiving client communications via an information item dealer 110, an embodiment of the information item broker 120 uses a private encryption key to decrypt the communication from the clients 103. Similarly, an embodiment of the information item broker 120 encrypts communications with the clients 103 using symmetric encryption keys shared with the clients 103 and sends the encrypted communications to the clients 103 via one or more information item dealers 110. The clients 103 may then decrypt communications from the information item broker 120 using the decryption key associated with the information item broker 120.

Alternative embodiments of the client 103 and information item broker 120 may use other types and combinations of public and private asymmetric keys and/or private symmetric keys to hide the contents of their communications from intermediaries such as proxies, information item dealers, or other entities.

In this embodiment of the invention, neither the information item dealer 110, which includes the proxy 115, nor the information item broker 120 may obtain enough information to violate the user's privacy. The use of the information item dealer 110 and proxy 115 hides the location of the clients 103 from the information item broker 120 and information item providers 130, such as advertisers. Also, the encrypted communications do not include any information identifying a specific user. Thus, the information item broker 120 receives no information that can identify the clients 103. The information item dealer 110 knows the clients' network addresses, but cannot decrypt the communications between the clients 103 and the information item broker 120, so the information item dealer 110 learns nothing about the clients 103 other than the fact that some interaction has taken place. As long as the operators of the information item broker 120 and information item dealer 110 do not collude, neither can learn which interactions have taken place. Further information on this technique of communicating via a proxy to maintain user privacy may be found in co-pending U.S. Patent Application No. 12/552,549, which is incorporated by reference herein.

In an embodiment, the billing/reporting module 126 of information item broker 120 uses the received notifications of user interactions with information items to provide one or more reports summarizing the interactions of one or more users. Embodiments of the information item broker 120 may provide reports to one or more of the information item providers 130.

In private advertising systems, a client requires access to its users' online behavior in order to build user profiles. For example, users' online behavior can be observed as they perform activities such as browsing the web, interacting with social networking systems, accessing online or offline content, and making purchases. These and similar activities provides information about users' interests, demographics, and psychographics, and is therefore of value to the advertising networks, information aggregators, and other types of brokers as well as advertisers and other types of information item providers. To assist in creating a robust economic framework for collecting and exploiting user activity, an embodiment of the invention provides at least three advantages over prior systems. First, publishers are able to control which advertising networks and other types of brokers have access to user activity information on their websites, applications, and other venues capable of presenting advertisements and other information items to users.

Second, a client system must be capable of supporting profiling and information selection from multiple independent advertising networks and other types of brokers. Third, the system should enable independent brokers to monitor user activity for the purpose of profiling in the context of cooperating publishers to understand system performance and facilitate payments between brokers and publishers.

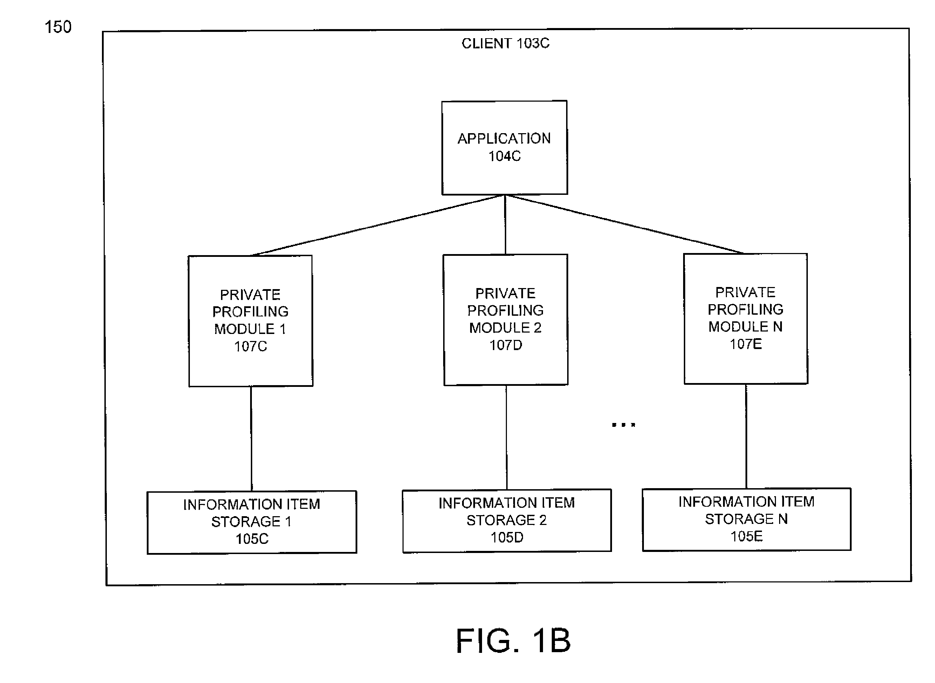

Figure 1B illustrates an example client system 103C according to an embodiment of the invention. Client system 103C includes one or more applications 104C capable of presenting information items to users, such as web browsers, application software, and game software. Application 104C is adapted to interface with one or more private profiling modules 107, such as 107C, 107D, and 107E. Each of the private profiling modules 107 is adapted to operate with a different, independent broker. Additionally, client system 103C includes one or more information item storages 105, such as 105C, 105D, and 105E. In an embodiment, each of the private profiling modules 107 is associated with its own information item storage, from which it can store information items received from its broker and select information items for presentation to users.

As discussed above, publishers may wish to control which brokers are able to present advertisements and other information items on their websites, applications, and other venues for information items. Additionally, publishers may wish to control which brokers and associated private profiling modules have access to user activity on their websites, applications, and other venues for information items. User activity includes any information communicated between a website or other content and the web browser or other application used to access this content; any interactions between the user and a web browser or other application while presenting content from the publisher; and ancillary information associated with user interactions. Ancillary information associated with user interactions includes an interaction time or time period; a URL or other content identifier; publisher content; user provided data such as search terms, form fields filled out by the user (e.g. name, address, gender, age, etc.); text or other content that the user highlights, copies, mouses over, or otherwise interacts with; and application interactions such as bookmarking content.

In an embodiment, a publisher or content provider can provide the application 104C with instructions to indicate which private profiling modules may or may not access the content and any associated user activity on the website. These instructions may be encoded in any type of format and included with the publisher's content or communicated to the client system separately. For example, a publisher may include instructions regarding private profiling modules embedded in an HTML tag within HTML source code for an associated web page. In further embodiments, instructions may be encoded in XML or other structured data formats or as unstructured data.

In an embodiment, publisher instructions may be expressed as a list of the names and/or identifiers of private profiling modules or brokers. For each listed private profiling module or broker listed in the instructions, an embodiment of the invention also includes an access priority value. In this embodiment, the application provides access to the content and user interactions associated with a web page or other content to the private profiling modules installed on the client and having the highest priority, as specified by the instructions from the publisher.

Alternate embodiments of the invention may specify access for private profiling modules in other ways. For example, a publisher could set maximum or minimum limits on the number of private profiling modules that may access the content. In a further embodiment, the publisher may include a parameter to be used by selection logic in the client to select private profiling modules. In another embodiment, a publisher may include executable code, for example in the form of Javascript associated with a web page or other content, that the application executes to determine which private profiling modules can access the content and any associated user interactions.

In another embodiment, the private profiling module may query its associated broker to determine if it is allowed to access the content and user interactions associated with a publisher. The private profiling module may provide its broker with a URL or domain name of the publisher. The broker may respond with the web page, set of web pages, or domains that the private profiling module may access. The query may be transmitted to the broker via a proxy, and encrypted with the broker's public key. The broker's reply may be returned via the proxy, and encrypted with a symmetric key provided to the broker by the private profiling module in the query. Alternatively, the query and reply may take place over an encrypted session using for instance TLS or HTTPS.

Once the set of clients has been selected, an embodiment of the invention provides feedback to the publisher, so that the publisher can monitor the operation of the system and optionally perform accounting and/or other monetization based on the presentation of content and user activity.

In an alternate embodiment, rather than the publisher providing instructions to the application regarding access to user activity by private profiling modules, the application contacts the publisher with a list of its private profiling modules. The publisher then responds with a selection of zero, one, or more private profiling modules to receive access to the publisher's content and any associated user activity.

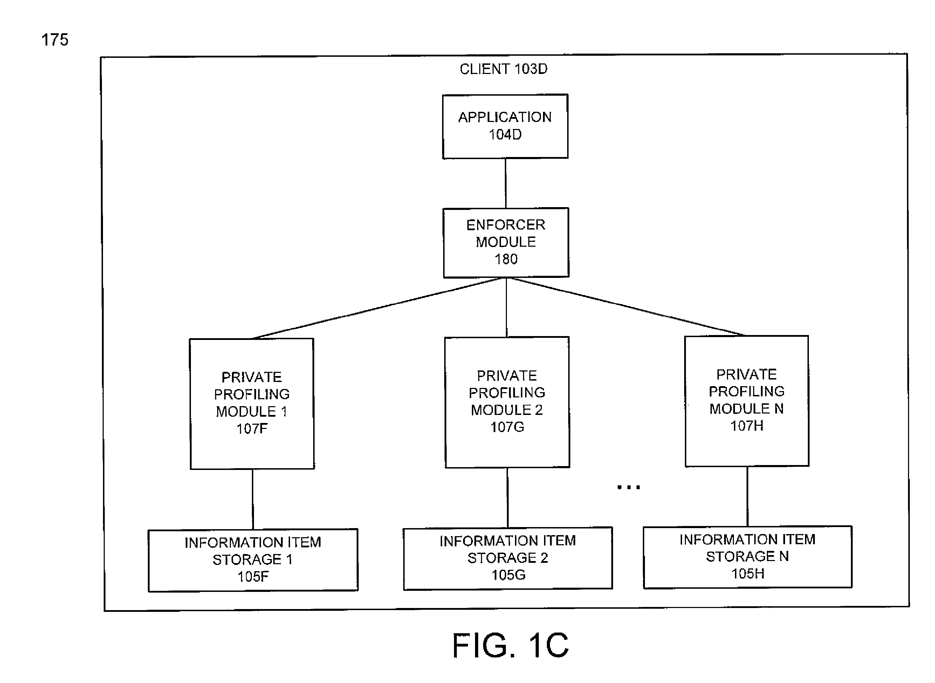

Figure 1C illustrates another example client system 103D according to an embodiment of the invention. Client system 103D includes one or more applications 104D capable of presenting information items to users, such as web browsers, application software, and game software. Application 104D is adapted to interface with one or more private profiling modules 107, such as 107F, 107G, and 107H, through an enforcer module 180. As described below, the enforcer module 180 controls the private profiling modules' 107 access to user activity, web page or other content, and/or profiling information based on the instructions from the content provider and/or publisher. Each of the private profiling modules 107 is adapted to operate with a different, independent broker. Additionally, client system 103D includes one or more information item storages 105, such as 105F, 105G, and 105H. In an embodiment, each of the private profiling modules 107 is associated with its own information item storage, from which it can store information items received from its broker and select information items for presentation to users.

Some types of applications, such as many typical web browsers, are capable of executing additional software components, such as plug-ins, scripts, and extension or enhancement modules. In an embodiment, private profiling modules may be implemented within an application as an additional software component.

However, some applications allow its additional software components to have access to any content within the application as well as any user activity. In one embodiment, private profiling modules may voluntarily comply with the instructions provided by a publisher regarding access to content and any user activity. In this embodiment, if a publisher specifies, explicitly or implicitly (for example by not including a given private profiling module in a list of permitted private profiling modules), that a given private profiling module is not permitted to access its content or any associated user activity, this private profiling module will voluntarily ignore the content and any user activity.

In another embodiment, an enforcer software module 180 is used to control access to content and user activity by private profiling modules. In this embodiment, the enforcer software module 180 has access to the content and any user activity and directs this information to zero, one, or more than one of the private profiling modules in response to instructions received from a publisher. In this embodiment, the private profiling modules 107 only have access to information as permitted by the enforcer module 180. The enforcer module 180 may be implemented as a separate software module, as part of one or more applications 104, as an additional software module executed by an application 104, or as part of an operating system or system level resource of the client 103D.

In alternate embodiments, some or all of the above-described modules, such as the private profiling modules, enforcer module, and/or information item storages, are implemented within a router, switch, firewall, gateway, wireless access point, broadband modem or network interface, and/or any other networking device. In these embodiments, the networking device is located on the client's local network and has full access to the client's incoming and outgoing network traffic. In these embodiments, the networking device intercepts network traffic between content publishers and clients. The networking device processes profiling restrictions included in the network traffic and provides profiling information to specified private profiling modules.

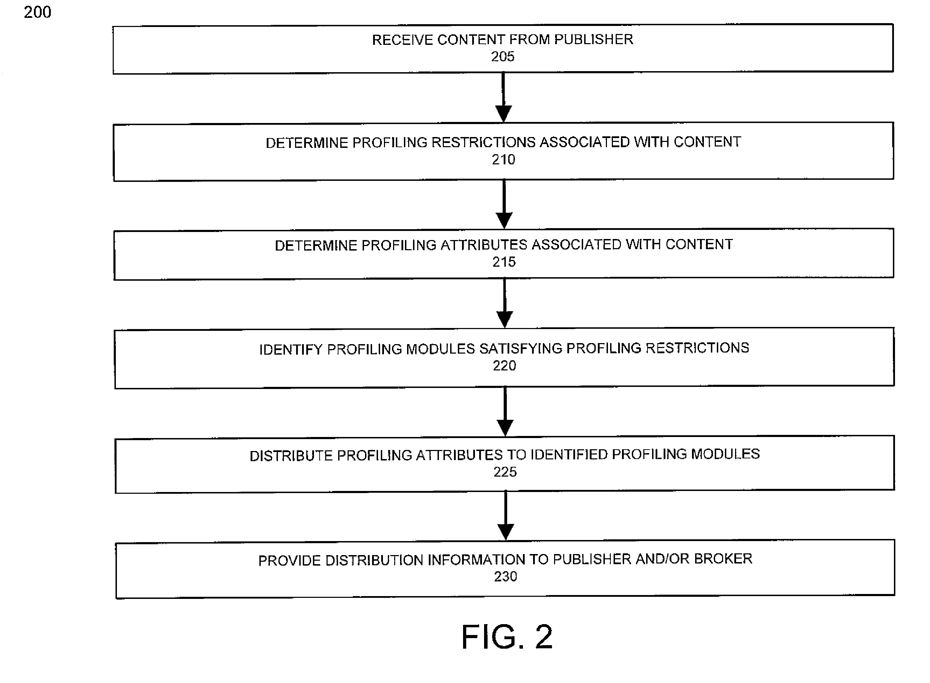

Figure 2 illustrates an example method 200 for creating profiles of private users according to an embodiment of the invention. Step 205 receives content from a publisher for presentation by a client to at least one user. Examples of content may include text, images, video, animation, speech, audio, three-dimensional computer graphics data and images or animation rendered therefrom, hypertext and web pages, application software and/or data adapted to be processed and presented by application software, interactive content such as games, and computer-executed logic in the form of programs or scripts.

Step 210 determines if there are any profiling restrictions associated with the content. As described above, publishers may wish to control which brokers and associated private profiling modules have access to their content and any user activity associated with their content.

In one embodiment, a publisher or content provider includes instructions embedded in or communicated in parallel with the content to indicate which private profiling modules (and hence which brokers) may or may not access the content and any associated user activity. For example, step 210 may parse or analyze the HTML or other source code of a web page to identify one or more HTML tags including publisher instructions regarding private profiling modules.

In another embodiment, step 210 may contact the publisher to request instructions indicating which private profiling modules may or may not access the content and any associated user activity.

In another embodiment, the private profiling module may contact the broker, via the proxy, to determine whether it can access the content and any associated user activity of a given publisher or publishers.

Step 215 determines profiling attributes associated with the content and with user actions relative to that content. Profiling attributes include data describing the content as well as attributes of the users that access and interact with the content. Examples of attributes describing the content are terms that describe products or services that the content is related to. For instance, if the content is an article about sites in Hawaii, the profiling attributes may include general travel, flights to Hawaii, hotels in Hawaii, restaurants in Hawaii, and so on. These attributes may be added to the user profile to indicate a potential interest in these attributes.

Examples of profiling attributes of users include user demographics, user interests, user intents, and user preferences or psychographics. Examples of user demographic profiling attributes include age, gender, location, spoken language, and income level. For example, if the user is browsing a shopping site for inexpensive baby clothes, the profiling attributes for user demographic may indicate that the user is likely a young mother without much disposable income. As the user accesses and interacts with different content, the profiler can build confidence as to the correct demographic of the user as certain attributes are reinforced and others are not.

Examples of user interest profiling attributes include products and services that the user may purchase. From the baby clothes example above, the profiling attributes for interest may include baby clothes, other products for babies (toys, diapers), baby sitting services, and so on.

The user intent profiling attributes indicate the likelihood that the user is going to purchase the product or service of interest. For instance, reading an article about baby clothes would imply little intent to purchase baby clothes, while browsing a shopping website for baby clothes would imply a strong intent.

Examples of user preference and psychographic profiling attributes include desire for prestige, desire for safety, desire to spend or save, preference for flashy versus conservative products, frivolous versus practical products, and so on. For instance, if a woman browsing a shopping website for shoes looks at many different shoes, finally selecting a pair that is inexpensive and comfortable, the profiling attribute for user psychographic may indicate that the user is not an impulse buyer, favors practicality over style, and is frugal.

In an embodiment, profiling attributes are embedded in or communicated in parallel with the content. For example, step 215 may parse or analyze the HTML or other source code of a web page to identify one or more HTML tags including publisher instructions regarding private profiling modules. When the profiling attributes are communicated to the client from the publisher, users do not lose any of their privacy with respect to the publisher. In an alternate embodiment, step 215 may retrieve the profiling attributes from the publisher, the broker, or other entities. This communication may be conducted using encryption and/or at least one proxy to protect the privacy of the user.

Step 220 identifies zero, one, or more than one private profiling modules included in the client to receive profiling attributes associated with the content, as well as information about any user interactions with this content. In an embodiment, step 220 compares the profiling restrictions associated with the content with attributes of the private profiling modules, such as private profiling module and/or broker identification names or other identifiers, and provides profiling attributes to any private profiling modules in the client that satisfy these profiling restrictions.

For example, profiling restrictions may specify the names or identifiers of brokers and/or private profiling modules. In this example, profiling attributes are provided to private profiling modules matching these names or identifiers. In another example, access priority values included in the profiling restrictions may be used to rank or prioritize access to private profiling modules. In another example, profiling restrictions may include maximum or minimum limits on the number of private profiling modules that may access the content and user interactions. In a further embodiment, a script, program, or other type of executable instructions may be included in the profiling restrictions. An application, private profiling module, and/or enforcer module may execute these included instructions to identify the private profiling modules that may access content and user interactions.

Step 225 distributes the profiling attributes to one or more private profiling modules as directed by the profiling restrictions. In an embodiment, an enforcer module distributes the profiling attributes and enables private profiling modules to access the content and any associated user interactions. In another embodiment, each private profiling module receives profiling attributes, but some of these private profiling modules ignore the profiling attributes based on the profiling restrictions.

Upon receiving profiling attributes associated with content and/or user interactions, private profiling modules may utilize these profiling attributes and attribute values in many different ways to create a profile of the user and his or her interests and attributes.

In an embodiment, private profiling modules may be preprogrammed with rules for creating and maintaining a user profile in response to profiling attributes. In another embodiment, a profiling attribute may include instructions as to how to modify and maintain the user profile according to the profiling attribute.

In an embodiment, there is a correspondence between the profiling attribute types used to construct the profile and the targeting attribute types associated with each ads or information items. Targeting attributes are attributes associated with information items and used to select which information items are presented to users. For instance, if there is a profiling attribute expressing an interest in tennis shoes, then there is a corresponding targeting attribute that may be associated with an advertisement or other information item associated with tennis shoes. In this example, information items associated with the corresponding targeting attribute related to tennis shoes are more likely to be selected for presentation to users with user profiles including this profiling attribute. Similarly, if there is a profiling attribute type of psychographic high prestige, then there may be a corresponding targeting attribute type of psychographic high prestige associated with ads or other information items potentially of interest to users with this psychographic profile.

In an embodiment, advertisements and other information items are selected for presentation to users based on the user profiles created from profiling attributes. In a further embodiment, the selection of information items is performed on the client, so that the user's privacy is preserved with respect to the broker. For example, the client may request and store information items from a broker in advance. This request may be communicated using encryption and a proxy to protect the user's privacy, as described above. After receiving and storing the information items, the client then selects one or more of these previously stored information items for presentation to the user based on the user profile and the targeting attributes of the stored information items.

Step 230 reports information on profiling attribute distribution to the content publisher and/or broker. In an embodiment, a publisher profile usage report indicates to the publisher which private profiling modules received the profiling attributes delivered with some given content. This publisher profile usage report may be transmitted directly to the publisher, for instance as part of the HTTP exchange, and may or may not be encrypted.

In a further embodiment, a broker profile usage report indicates to the broker profile usage information. This may include information that reflects the value of the profiling attributes to the private profiling modules. The broker profile usage report is delivered via a proxy system, and is encrypted using the public key of the broker.

In an embodiment, the broker profile usage report includes the identity of the publisher so that the broker can provide reporting and/or payments as appropriate, as well as other attributes. In embodiments of step 230, private profiling modules may provide broker profile usage reports in aggregate form that specify profiling attribute usage over a time period. In an embodiment, all private profiling modules use the same time period (i.e. every 24 hours beginning at 12:00 GMT) so as to prevent the broker from linking together a series of reports from the same private profiling module. The time period to be used may be conveyed to the private profiling module by the publisher, for instance along with the content. Alternatively, the private profiling module may request the time period from the broker via a query. The query and subsequent reply are delivered similarly to the request for advertisements described in the incorporated co-pending U.S. Patent Application No. 12/552,549, which is incorporated by reference herein for all purposes.

In an embodiment, the broker profile usage report may contain statistics or other metrics about the profiling attributes received by the private profiling module during the reporting period, such as the number of times profiling attributes were received by the profiling module; the total number of distinct interest types that were received by the profiling module; the number of new (i.e. not already in the user profile) interest types that were received by the profiling module; and the number of demographic types, psychographic types, and intents that were received by the profiling module.

In another embodiment, the private profiling module reports the change or amount of effect that newly received profiling attributes have on the user profile. For instance, if a profiling attribute establishes the user's gender in the profile for the first time, then a large effect is reported. If on the other hand the gender was already well established in the profile, then a small or null effect is reported. Likewise if a new interest is added to the profile because of a profiling attribute, a large effect is reported. If however the interest was already known by the profile, and the profiling attribute only strengthened the interest slightly, then a small effect is reported. This effect may be quantified as a numerical value, for instance ranging from 0 - 10.

In a further embodiment, the private profiling module reports the extent to which a publisher was responsible for providing profile attributes that led to showing ads to the user. To do this, the private profiling module may record how much each publisher contributed to a given profile attribute. For instance, it may record that publisher P1 contributed 25% to the attribute interest tennis shoes, that publisher P2 contributed 30%, and that publisher P3 contributed 45%. Then, when an advertisement targeted to tennis shoes is matched against the profile such that the advertisement is shown to the user, the relative contribution of each publisher is recorded and reported to the broker in the broker profile usage report. In this way, each publisher can be remunerated according to the publisher's actual contribution to showing ads. In an embodiment, the private profiling module takes into account the time that has elapsed since the publishers contribution to the profile attribute so that newer contributions are valued more than older contributions.

In yet another alternative embodiment, the private profiling module reports the extent to which a publisher was responsible for providing profile attributes that led to shown ads being clicked by the user. In this way, each publisher can be remunerated according to the publisher's actual contribution to ads being clicked.

In still another embodiment, the private profiling module reports the extent to which a publisher was responsible for providing profile attributes that led to clicked ads which resulted in an action such as a purchase or a registration on a website. In this way, each publisher can be remunerated according to the publisher's actual contribution to ads leading to an action.

The broker may use the broker usage profile reports to determine how much to pay each publisher. The broker may also provide the publisher with detailed or aggregate information about the contents of the broker usage profile reports.

Embodiments of step 230 may communicate distribution information via encryption and/or at least one proxy to protect the privacy of the user, as described above.

Brokers may aggregate distribution information and provide reports or other aggregate data to publishers.

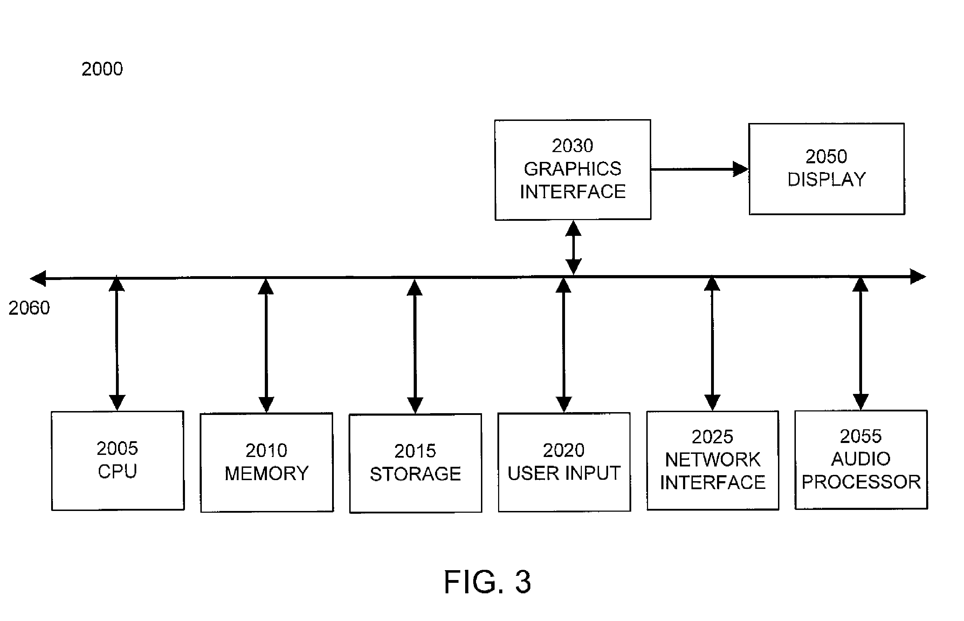

Figure 3 illustrates an example computer system 2000 suitable for implementing embodiments of the invention. Figure 3 is a block diagram of a computer system 2000, such as a personal computer, server computer, video game console, personal digital assistant, or other digital device, suitable for practicing an embodiment of the invention. Computer system 2000 includes a central processing unit (CPU) 2005 for running software applications and optionally an operating system. CPU 2005 may be comprised of one or more processing cores. Memory 2010 stores applications and data for use by the CPU 2005. Storage 2015 provides non-volatile storage for applications and data and may include fixed or removable hard disk drives, flash memory devices, and CD-ROM, DVD-ROM, Blu-ray, HD-DVD, or other magnetic, optical, or solid state storage devices.

User input devices 2020 communicate user inputs from one or more users to the computer system 2000, examples of which may include keyboards, mice, joysticks, digitizer tablets, touch pads, single or multitouch touch screens, still or video cameras, and/or microphones. Network interface 2025 allows computer system 2000 to communicate with other computer systems via an electronic communications network, and may include wired or wireless communication over local area networks and wide area networks such as the Internet. An optional audio processor 2055 is adapted to generate analog or digital audio output from instructions and/or data provided by the CPU 2005, memory 2010, and/or storage 2015. The components of computer system 2000, including CPU 2005, memory 2010, data storage 2015, user input devices 2020, network interface 2025, and audio processor 2055 are connected via one or more data buses 2060.

A graphics interface 2030 is further connected with data bus 2060 and the components of the computer system 2000. The graphics interface 2030 is adapted to output pixel data for an image to be displayed on display device 2050. Display device 2050 is any device capable of displaying visual information in response to a signal from the computer system 2000, including CRT, LCD, plasma, OLED, and SED displays. Computer system 2000 can provide the display device 2050 with an analog or digital signal.

In embodiments of the invention, CPU 2005 is one or more general-purpose microprocessors having one or more homogenous or heterogeneous processing cores. Computer system 2000 may further implement one or more virtual machines for executing all or portions of embodiments of the invention.

Further embodiments can be envisioned to one of ordinary skill in the art after reading the attached documents. In other embodiments, combinations or subcombinations of the above disclosed invention can be advantageously made. The block diagrams of the architecture and flow charts are grouped for ease of understanding. However it should be understood that combinations of blocks, additions of new blocks, re-arrangement of blocks, and the like are contemplated in alternative embodiments of the present invention.

The specification and drawings are, accordingly, to be regarded in an illustrative rather than a restrictive sense. It will, however, be evident that various modifications and changes may be made thereunto without departing from the broader spirit and scope of the invention as set forth in the claims.

## Claims

1. A computer-readable storage medium including instructions adapted to direct a computer to perform an operation, the operation comprising:
receiving an electronic content item from a content publisher;
receiving a profiling restriction;
in response to the profiling restriction, selecting at least one of a set of private profiling modules; and
providing profiling information to the selected private profiling modules, thereby enabling the selected private profiling modules to determine at least a portion of a user profile based on the electronic content item.

2. The computer-readable storage medium of claim 3, wherein the profiling restriction is included in the electronic content item.

3. The computer-readable storage medium of claim 1, wherein the profiling restriction is received from a broker.

4. The computer-readable storage medium of claim 5, wherein receiving a profiling restriction comprises:
communicating an identifier associated with the electronic content item to the broker; and
receiving the profiling restriction from the broker in response to the identifier associated with the electronic content item.

5. The computer-readable storage medium of claim 1, wherein the profiling restriction includes an identifier associated with at least one broker adapted to distribute information items to private users via one of the set of private profiling modules.

6. The computer-readable storage medium of claim 1, wherein receiving a profiling restriction from the content publisher comprises:
communicating a list of the set of private profiling modules to the content publisher; and
receiving the profiling restriction in response to the list of the set of private profiling modules.

7. The computer-readable storage medium of claim 1, wherein the profiling information includes at least one parameter for directing profiling logic of the selected private profiling module to modify the user profile.

8. The computer-readable storage medium of claim 1, wherein the profiling information is based on a user interaction with respect to the electronic content item.

9. The computer-readable storage medium of claim 1, wherein the profiling information is received from a broker.

10. The computer-readable storage medium of claim 1, comprising:
generating a report based on aggregated profiling information provided to the selected private profiling module over a time period; and
communicating the report to a broker associated with the selected private profiling module, wherein the broker is adapted to distribute information items to private users via the selected private profiling module.

11. The computer-readable storage medium of claim 16, wherein communicating comprises:
encrypting the report with a cryptographic key associated with the broker, such that the report cannot be accessed by a proxy; and
communicating the encrypted report through the proxy to the broker, such that the broker cannot identify a network address associated with the user profile.

12. A method for specifying user privacy in association with an information item, the method comprising: receiving an information item request from a client computer including a privacy monitor; selecting at least one information item in response to the information item request; selecting at least one item response specifier corresponding with the selected information item, wherein the item response specifier indicates a privacy-preserving behavior of a privacy monitor in response to a user interaction with the information item; and transmitting the selected information item and selected item response specifier to the client computer.

13. The method of claim 12, wherein the item response specifier indicates a silent privacy-preserving behavior, such that the client computer is inhibited from communicating an indicator of user interaction with the selected information item.

14. The method of claim 12, wherein the item response specifier indicates a proxied privacy-preserving behavior, such that the client computer is directed to retrieve at least one supplemental information item via at least one proxy adapted to conceal the network address of the client computer and using encryption adapted to conceal contents of the supplemental information item from at least the proxy.

15. The method of claim 12, comprising: indicating a delayed handoff privacy-preserving behavior with the item response specifier; associating the selected information item with a first supplemental information item identifier, wherein the first supplemental information item identifier is associated with a first supplemental information item stored by an information item broker; associating the first supplemental information item with a second supplemental information item identifier, wherein the second supplemental information item identifier is associated with a second supplemental information item stored by an information item provider; and transmitting the first supplemental information item identifier to the client computer.

16. A method for specifying user privacy in association with an information item, the method comprising: receiving at least one information item from an information item broker; transmitting an item response specifier request to an item response specifier provider; receiving an item response specifier from the item response specifier provider, wherein the item response specifier indicates a first type of privacy-preserving behavior in response to a user interaction with the information item; and associating the item response specifier with the information item.

17. The method of claim 16, comprising: receiving a notification of the user interaction with the information item; identifying the item response specifier associated with the information item; and performing the first type of privacy-preserving behavior for the information item using the privacy monitor.

18. The method of claim 16, comprising: receiving at least a second information item and a second item response specifier, wherein the second item response specifier indicates a second type of privacy-preserving behavior in response to a user interaction with the second information item; and associating the second item response specifier with the second information item; wherein the first type of privacy-preserving behavior is different than the second type of privacy-preserving behavior.

19. The method of claim 16, wherein the item response specifier indicates a silent privacy-preserving behavior, such that a client computer is inhibited from communicating an indicator of user interaction with the selected information item.
